# EUROPÄISCHE PATENTSCHRIFT

(11) **EP 1 116 342 B1**
(45) Veröffentlichungstag und Bekanntmachung des Hinweises auf die Patenterteilung: **18.06.2003**
(21) Anmeldenummer: 99955772.1
(22) Anmeldetag: 22.09.1999
(51) Int. Cl.: H04B 7/005

(54) **VERFAHREN UND BASISSTATION ZUR KANALZUWEISUNG IN EINEM FUNK-KOMMUNIKATIONSSYSTEM**
METHOD AND BASE STATION FOR CHANNEL ALLOCATION IN A RADIO COMMUNICATIONS SYSTEM
PROCEDE ET STATION DE BASE POUR L'AFFECTATION D'UN CANAL DANS UN SYSTEME DE RADIOTELECOMMUNICATIONS

(30) Priorität: 24.09.1998 DE 19843982
(43) Veröffentlichungstag der Anmeldung: 18.07.2001
(73) Patentinhaber: SIEMENS AKTIENGESELLSCHAFT, 80333 München (DE)
(72) Erfinder: DILLINGER, Markus, D-81737 München (DE); SCHINDLER, Jürgen, D-81369 München (DE); TRAYNARD, Jean-Michel, D-81667 München (DE)
(86) Internationale Anmeldenummer: DE9903039
(87) Internationale Veröffentlichungsnummer: WO00018032

(56) Entgegenhaltungen:
- EP-A- 0 913 957
- HAMABE K ET AL: "FORWARD-LINK POWER CONTROL UTILIZING NEIGHBORING-CELL PILOT POWER FOR DS-CDMA CELLULAR SYSTEMS" IEEE VEHICULAR TECHNOLOGY CONFERENCE,US,NEW YORK, IEEE, Bd. CONF. 47, 1997, Seiten 939-943, XP000736746 ISBN: 0-7803-3660-7
- KIM D: "DOWNLINK POWER ALLOCATION AND ADJUSTMENT FOR CDMA CELLULAR SYSTEMS" IEEE COMMUNICATIONS LETTERS,US,IEEE SERVICE CENTER, PISCATAWAY,US, Bd. 1, Nr. 4, 1. Juli 1997 (1997-07-01), Seiten 96-98, XP000695213 ISSN: 1089-7798

## Beschreibung

Die Erfindung betrifft ein Verfahren und eine Basisstation zur Kanalzuweisung in einem Funk-Kommunikationssystem, insbesondere in einem Mobilfunksystem oder drahtlosen Teilnehmerzugangssystem.

In Funk-Kommunikationssystemen werden Nutzdaten, wie beispielsweise Sprache, Bildinformation oder andere Daten, mit Hilfe von elektromagnetischen Wellen über eine Funkschnittstelle zwischen einer sendenden und einer empfangenden Funkstation übertragen. Das Abstrahlen der elektromagnetischen Wellen erfolgt dabei mit Trägerfrequenzen, die in dem für das jeweilige System vorgesehenen Frequenzband liegen. Beim bekannten GSM-Mobilfunksystem (Global System for Mobile Communication), wie es unter anderem aus J. Biala, "Mobilfunk und intelligente Netze", Vieweg Verlag, 1995, insbesondere den Seiten 57 bis 92, bekannt ist, liegen die Trägerfrequenzen im Bereich von 900 MHz, 1800 MHz und 1900 MHz. Für zukünftige Funkkommunikationssysteme, beispielsweise das UMTS (Universal Mobile Telecommunication System) oder andere Systeme der 3. Generation sind Frequenzen im Frequenzband von ca. 2000 MHz vorgesehen. Zur Unterscheidung unterschiedlicher Signalquellen am Ort des jeweiligen Empfängers sind Frequenzmultiplex- (FDMA), Zeitlagenmultiplex- (TDMA) und/oder Kodemultiplexverfahren (CDMA) sowie Kombinationen dieser bekannten Verfahren einsetzbar.

Auf der Seite 78 des genannten Standes der Technik von J. Biala eines GSM-Mobilfunksystems ist offenbart, daß eine mobile Funkstation bei einem Verbindungsaufbau einen speziellen Signalisierungskanal RACH (Random Access Channel) für die Anforderung eines Übertragungskanals bei einer Basisstation verwendet. Um eine Blockierung bei einem gleichzeitigen Zugriff mehrerer mobiler Funkstationen auf diesen Signalisierungskanal zu verhindern, erfolgt der Zugriff nach einem zeitlichen Zufallszugriffsverfahren. Als Bestätigung auf die Verbindungsanfrage erfolgt von der Basisstation auf einem weiteren Signalisierungskanal AGCH (Access Grant Channel) eine direkte Zuweisung eines Übertragungskanals oder ein Verweis auf einen spezifischen Signalisierungskanal SDCCH (Stand-Alone Dedicated Channel) für die weitere standardgemäße Verbindungsaufbauprozedur. Der Signalisierungskanal AGCH wird dabei von der Basisstation mit der jeweils maximalen Sendeleistung gesendet.

Ein Funk-Kommunikationssystem, das eine Teilnehmerseparierung gemäß einem CDMA-Verfahren aufweist, ist aufgrund einer gleichzeitigen Nutzung eines Frequenzbandes durch eine Vielzahl von Teilnehmern sehr empfindlich gegenüber Störungen durch eine zu hohe Sendeleistung.

Der Erfindung liegt die Aufgabe zugrunde, ein Verfahren und eine Basisstation anzugeben, die eine Zuweisung von Übertragungskanälen zu Kommunikationsverbindungen in einem Funk-Kommunikationssystem, das ein CDMA-Teilneherseparierungsverfahren nutzt, ohne Beeinträchtigung der Übertragungsqualität ermöglichen. Diese Aufgabe wird gemäß der Erfindung durch die Merkmale der unabhängigen Patentansprüche gelöst. Vorteilhafte Ausgestaltungen der Erfindung sind den jeweiligen Unteransprüchen zu entnehmen.

Erfindungsgemäß wird beim Verfahren zur Kanalzuweisung in einem Funk-Kommunikationssystem, das ein CDMA-Teilnehmerseparierungsverfahren zur Übertragung von Informationen für Kommunikationsverbindungen über eine Funkschnittstelle zwischen einer Basisstation und einer Funkstation nutzt, von der Funkstation eine Anforderung einer Anzahl Übertragungskanäle für eine Kommunikationsverbindung in einem Signalisierungskanal zu der Basisstation signalisiert. Weiterhin werden von der Funkstation zusätzliche Informationen über gemessene Übertragungsbedingungen der Funkschnittstelle in dem Signalisierungskanal zu der Basisstation signalisiert. Diese zusätzlichen Informationen werden von der Basisstation ausgewertet und für eine Steuerung einer Sendeleistung für einen weiteren Signalisierungskanal zur Zuweisung der angeforderten Anzahl Übertragungskanäle zu der Funkstation berücksichtigt.

Die Erfindung besitzt den Vorteil, daß die Basisstation aufgrund der von der Funkstation bestimmten Übertragungsbedingungen der Funkschnittstelle eine Einschätzung hinsichtlich der benötigten Sendeleistung für den anschließend gesendeten weiteren Signalisierungskanal zur Zuweisung der angeforderten Übertragungskanäle durchführen kann. Durch diese Regelung der Sendeleistung wird vorteilhaft die Störwirkung des weiteren Signalisierungskanals auf die Empfangsverhältnisse weiterer empfangender Funkstationen, die in dem gleichen Frequenzband eine Kommunikationsverbindung betreiben verringert.

Gemäß zweier alternativer Weiterbildungen der Erfindung wird zum einen von der Funkstation als zusätzliche Informationen ein Empfangspegel für einen von der Basisstation mit einer konstanten Sendeleistung gesendeten allgemeinen Signalisierungskanal bestimmt, der allgemeine Informationen über das Funk-Kommunikationssystem enthält, und zum anderen als zusätzliche Informationen zumindest ein charakteristischer Wert bestimmt, der eine Aussage über einen Empfangspegel, eine Bitfehlerrate und/oder ein der Signallaufzeit zwischen der Funkstation und der Basisstation proportionaler Wert und/oder ein Signal-Rausch-Verhältnis beinhält.

Aufgrund der Messung des Empfangspegels kann von der Funkstation die bei der Übertragung über die Funkschnittstelle auftretende Dämpfung bestimmt werden, da in der Regel der Funkstation bekannt ist, mit welcher Sendeleistung der allgemeine Signalisierungskanal von der Basisstation gesendet wird. Ausgehend von dieser Messung kann die Basisstation die erforderliche Sendeleistung für den weiteren Signalisierungskanal zur Zuweisung ermitteln. Wird von der Funkstation ein charakteristischer Wert mit den angegebenen Parametern ermittelt, so kann die Basisstation vorteilhaft eine sehr genaue Einschätzung hinsichtlich der Übertragungsverhältnisse vornehmen und entsprechend eine genaue Steuerung der Sendeleistung für den weiteren Signalisierungskanal zur Zuweisung durchführen. In beiden Fällen werden auftretende Interferenzstörungen für parallele Kommunikationsverbindungen verringert und somit vorteilhaft die Übertragungsqualität erhöht. Weiterhin können die zusätzlichen Informationen nachfolgend vorteilhaft für die Steuerung der Sendeleistung für die zugewiesenen Übertragungskanäle verwendet werden, wodurch der zusätzliche Signalisierungsaufwand ausgeglichen wird.

Einer weiteren Weiterbildung der Erfindung zufolge wird von der Funkstation als zusätzliche Informationen eine jeweilige Interferenzsituation in Zeitschlitzen bestimmt und zu der Basisstation signalisiert, wobei in dem Funk-Kommunikationssystem gemäß einer vorausgehenden Weiterbildung zusätzlich eine Teilnehmerseparierung nach einem TDMA-Verfahren durchgeführt wird.

Die zusätzlichen Informationen über die jeweilige Interferenzsituation in den Zeitschlitzen können dabei gemäß einer weiteren Weiterbildung der Erfindung von der Basisstation für eine Auswahl zumindest eines geeigneten Zeitschlitzes, in dem die angeforderte Anzahl Übertragungskanäle zugewiesen wird, berücksichtigt werden.

Durch diese Weiterbildungen kann die Basisstation eine Zuweisung der angeforderten Übertragungskanäle unter Berücksichtigung der Interferenzverhältnisse, die am Ort der Funkstation bestehen, durchführen. Hierdurch wird die Übertragungsqualität für die zugewiesenen Übertragungskanäle vorteilhaft erhöht, wobei gleichzeitig eine geringere Störung für parallel in den gleichen Zeitschlitzen betriebene Kommunikationsverbindungen durch die neu aufgebaute Kommunikationsverbindung auftritt. Es wird somit eine vorteilhafte Zuweisung von Übertragungskanälen zu Funkstationen in der Weise durchgeführt, daß für die jeweilige Funkstation in dem oder den zugewiesenen Zeitschlitzen eine möglichst günstige Interferenzsituation gegeben ist.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung der Rahmenstruktur der Funkschnittstelle und des Aufbaus eines Funkblocks,
- FIG 3: ein Signalisierungsdiagramm des erfindungsgemäßen Verfahrens, und
- FIG 4: ein erweitertes Signalisierungsdiagramm des erfindungsgemäßen Verfahrens.

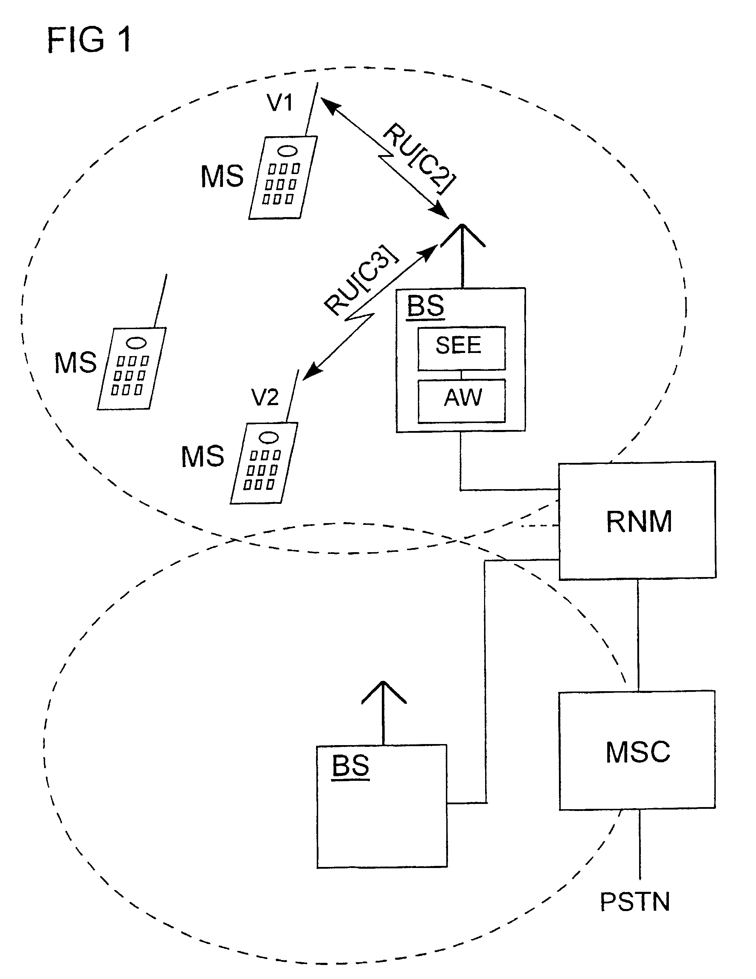

Das in FIG 1 dargestellte und beispielhaft als ein Mobilfunksystem ausgestaltete Funk-Kommunikationssystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuteilung funktechnischer Ressourcen RNM verbunden. Jede dieser Einrichtungen RNM ermöglicht wiederum eine Verbindung zu zumindest einer Basisstation BS. Diese Basisstation BS ist eine Funkstation, die über eine Funkschnittstelle Kommunikationsverbindungen zu mobilen Funkstationen MS aufbauen und auslösen kann. Die Funktionalität dieser Struktur wird von dem erfindungsgemäßen Verfahren genutzt. Ein Einsatz in beispielsweise einem drahtlosen Teilnehmeranschlußsystem (Access-Network) ist dabei ebenso möglich.

In FIG 1 sind beispielhaft zwei Kommunikationsverbindungen V1, V2 zur Übertragung von Nutzdaten und Signalisierungsinformationen zwischen zwei mobilen Funkstationen MS und einer Basisstation BS dargestellt, wobei den Kommunikationsverbindungen V1, V2 jeweils ein Übertragungskanal RU, der durch jeweils einen CDMA-Kode C1 bzw. C2 definiert ist, zugewiesen wurde. Dieses entspricht einem bekannten CDMA-Teilnehmerseparierungverfahren. Weiterhin befindet sich eine weitere mobile Funkstation MS in dem Funkversorgungsbereich der Basisstation BS, die in dem dargestellten Fall noch keine Kommunikationsverbindung aufgebaut hat.

Entsprechend einem aus dem Artikel von J. Mayer, J. Schlee, T. Weber "Protocol and Signalling Aspects of Joint Detection CDMA", PIMRC'97, Helsinki, 1997, Seiten 867-871, bekannten Channel-Pooling können einer Kommunikationsverbindung jeweils ein oder mehrere Übertragungskanäle RU zugewiesen werden, wobei jeder Übertragungskanal RU gemäß dem CDMA-Teilnehmerseparierungsverfahren durch einen individuellen CDMA-Kode c unterscheidbar ist. Das Verfahren des Channel-Poolings wird vorteilhaft eingesetzt, um Kommunikationsverbindungen zu bzw. von Funkstationen mit unterschiedlichen Datenraten realisieren oder um auf einer Kommunikationsverbindung mehrere Dienste parallel betreiben zu können.

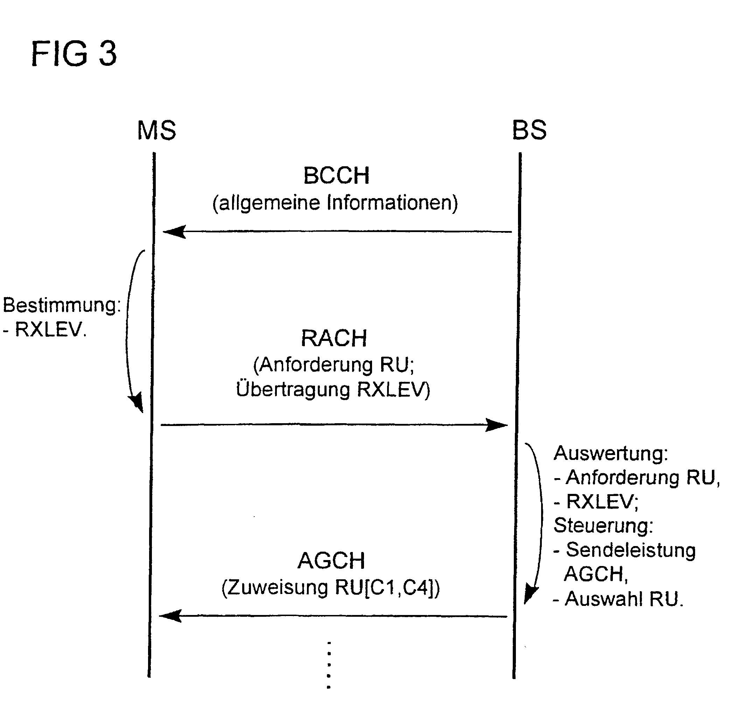

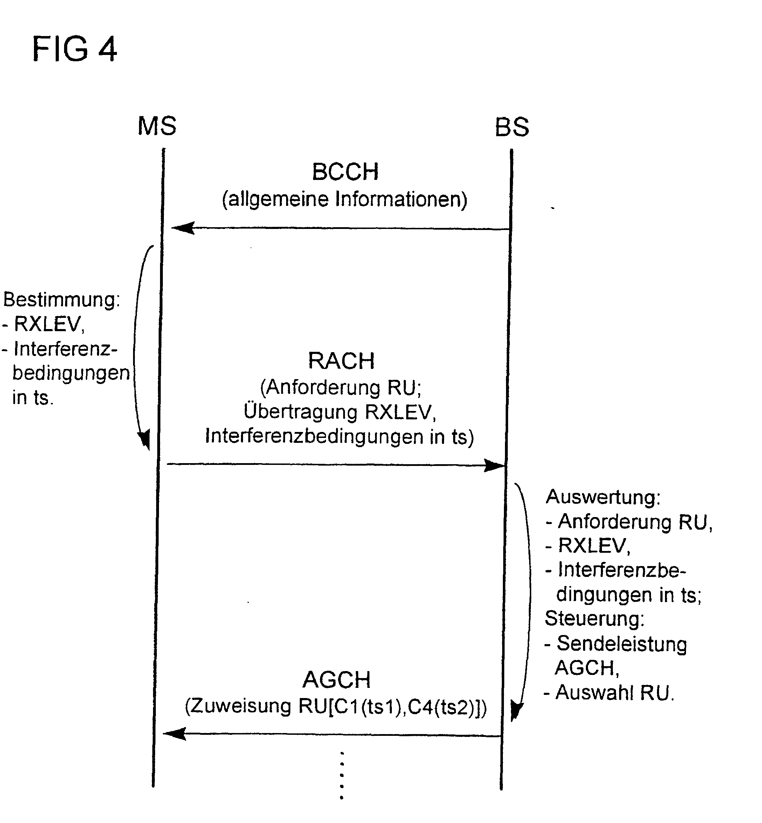

Für das Senden und Empfangen von Nutz- und Signalisierungeinformationen in Übertragungskanälen RU und Signalisierungskanälen weist die Basisstation BS eine Sende-und Empfangseinrichtung SEE auf. Die Basisstation BS weist neben der Sende-/Empfangseinrichtung SEE und einer erfindungsgemäßen Auswerteeinrichtung AW, dessen Funktion in der Beschreibung zu den FIG 3 und FIG 4 beschrieben wird, weitere nicht dargestellte Komponenten und Einrichtungen auf. Eine entsprechende Sende-/Empfangseinrichtung SEE und Auswerteeinrichtung AW kann auch in der mobilen Funkstation MS verwirklicht sein.

Die Basisstation BS ist zur Ausleuchtung eines Funkversorgungsgebietes mit einer Antenneneinrichtung verbunden, die beispielsweise aus drei Einzelstrahlern besteht. Jeder der Einzelstrahler strahlt gerichtet in einen Sektor des versorgten Funkversorgungsgebietes. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) ermöglicht wird.

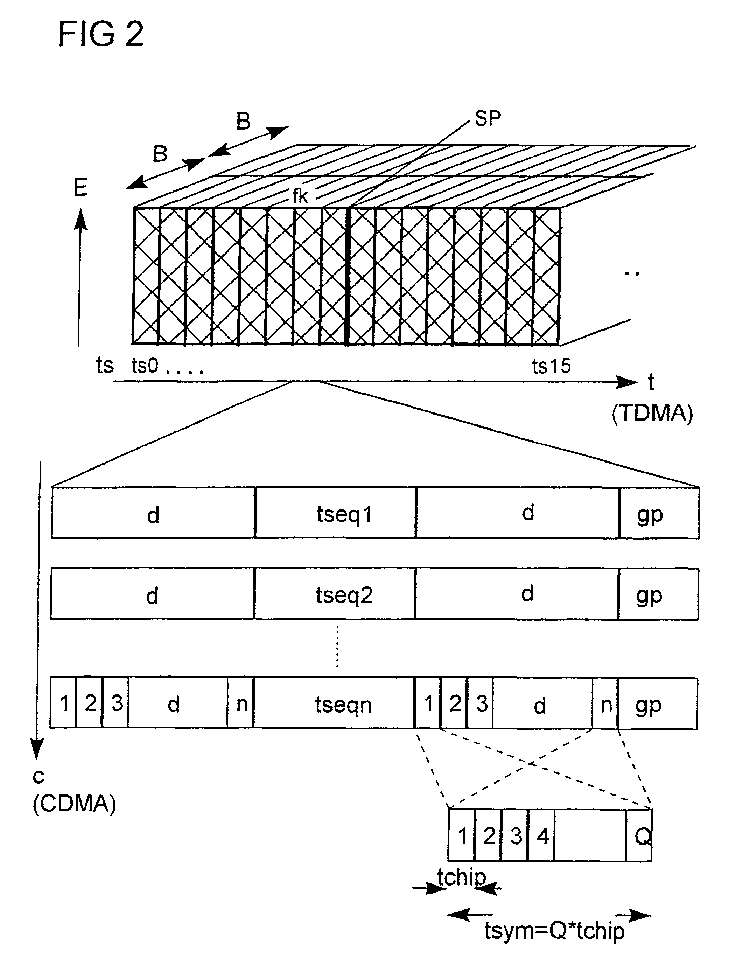

Eine beispielhafte Rahmenstruktur der Funkschnittstelle ist aus der FIG 2 ersichtlich. Gemäß einer TDMA-Komponente ist eine Aufteilung eines breitbandigen Frequenzbandes, beispielsweise der Bandbreite B = 5 MHz, in mehrere Zeitschlitze ts, beispielsweise 16 Zeitschlitze ts0 bis ts15 vorgesehen. Jeder Zeitschlitz ts innerhalb des Frequenzbandes B bildet einen Frequenzkanal fk. Innerhalb eines breitbandigen Frequenzbandes B werden die aufeinanderfolgenden Zeitschlitze ts nach einer Rahmenstruktur gegliedert. So werden 16 Zeitschlitze ts0 bis ts15 zu einem Rahmen zusammengefaßt.

Bei einer Nutzung eines TDD-Übertragungsverfahrens wird ein Teil der Zeitschlitze ts1 bis ts15 in Aufwärtsrichtung und ein Teil der Zeitschlitze ts0 bis ts15 in Abwärtsrichtung benutzt, wobei die Übertragung in Aufwärtsrichtung beispielsweise vor der Übertragung in Abwärtsrichtung erfolgt. Dazwischen liegt ein Umschaltzeitpunkt SP, der entsprechend dem jeweiligen Bedarf an Übertragungskanälen für die Auf- und Abwärtsrichtung flexibel positioniert werden kann. Ein Frequenzkanal fk für die Aufwärtsrichtung entspricht in diesem Fall dem Frequenzkanal fk für die Abwärtsrichtung. In gleicher Weise sind die weiteren Frequenzkanäle fk strukturiert.

Innerhalb der Frequenzkanäle fk werden Informationen mehrerer Verbindungen in Funkblöcken übertragen. Diese Funkblöcke bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode c (CDMA-Kode), gespreizt, so daß empfangsseitig beispielsweise n Verbindungen durch diese CDMA-Komponente separierbar sind. Die Kombination aus einem Frequenzkanal fk und einem Spreizkode C definiert einen Übertragungskanal RU, der für die Übertragung von Signalisierungs- und Nutzinformationen genutzt werden kann.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen CDMA-Kode c. Weiterhin ist innerhalb des Zeitschlitzes ts eine Schutzzeit gp zur Kompensation unterschiedlicher Signalaufzeiten der Verbindungen aufeinanderfolgender Zeitschlitze ts vorgesehen.

Eine Anwendung des erfindungsgemäßen Verfahrens ist beispielsweise auch für ein bekanntes CDMA-Teilnehmerseparierungsverfahren möglich, bei dem ein Übertragungskanal RU lediglich durch ein Frequenzband B und einen CDMA-Kode definiert wird, und eine kontinuierliche Übertragung von Nutz-und Signalisierungsinformationen in den Übertragungskanälen erfolgt.

In der FIG 3 und FIG 4 sind Signalsierungsdiagramme für jeweils eine beispielhafte Ausführung des erfindungsgemäßen Verfahrens dargestellt. Hierbei wird bezogen auf das Funk-Kommunikationssystem der FIG 1 von einer mobilen Funkstation MS ein Verbindungsaufbauversuch ausgeführt. Dieses geschieht beispielsweise in der vom GSM-Mobilfunksystem bekannten Weise, daß die mobile Funkstation MS einen allgemeinen Signalisierungskanal BCCH, in dem periodisch allgemeine Informationen über das Mobilfunksystem übertragen werden und der parallel von allen Basisstationen BS gesendet wird, abhört und einen Verbindungsaufbau zu der Basisstation BS, dessen Signalisierungskanal BCCH sie mit der größten Empfangsstärke empfängt, initiiert. Dieses ist in der Regel die Basisstation BS, in deren Funkversorgungsbereich sich die mobile Funkstation MS aktuell befindet. Der allgemeine Signalisierungskanal BCCH kann gemäß der in der FIG 1 dargestellten Struktur der Funkschnittstelle beispielsweise in dem ersten Zeitschlitz ts0 von den Basisstationen BS gesendet werden, wobei eine Unterscheidbarkeit der verschiedenen Basisstationen BS durch eine unterschiedliche Trainingssequenz tseq sichergestellt ist.

Wie in der FIG 3 angegeben bestimmt die mobile Funkstation MS beispielsweise die Empfangsstärke RXLEV, mit der sie den allgemeinen Signalisierungskanal BCCH empfängt. Dargestellt ist hierbei nur die Basisstation BS, in deren Funkversorgungsgebiet sich die mobile Funkstation MS aktuell befindet und dessen allgemeinen Signalisierungskanal BCCH sie mit der größten Empfangsstärke empfängt. Alternativ kann die mobile Funkstation MS auch einen charakteristischen Wert bestimmen, der eine Aussage über einen Empfangspegel RXLEV, eine Bitfehlerrate und/oder ein der Signallaufzeit zwischen der Basisstation BS und der mobilen Funkstation MS proportionaler Wert und/oder ein Signal-Rausch-Verhältnis beinhält. Die Beispiele in der FIG 3 und FIG 4 beziehen sich jedoch nur auf eine Bestimmung der Empfangsstärke RXLEV.

Die bestimmte Empfangsstärke RXLEV überträgt die mobile Funkstation MS gemeinsam mit der Anforderung zum Verbindungsaufbau in einem Signalisierungskanal RACH zu der Basisstation BS. Der Signalisierungskanal RACH kann dabei in seiner Grundstruktur dem aus dem GSM-Mobilfunksystem bekannten Random Access Channel (RACH) entsprechen, den die mobilen Funkstationen MS für einen wahlfreien Vielfachzugriff nach dem Prinzip des Slotted-Aloha-Verfahrens nutzen. Hierbei fordert die mobile Funkstation MS einen dedizierten und exklusiv der jeweiligen mobilen Funkstation MS zugewiesenen Signalisierungskanal (SDCCH - Stand Alone Dedicated Control Channel) an. In einem derartigen spezifischen Signalisierungskanal SDCCH kann die mobile Funkstation MS beispielsweise eine genauere Spezifizierung der benötigten Anzahl Übertragungskanäle RU für die aufzubauende Kommunikationsverbindung V durchführen. Denkbar und in der Weise in der FIG 3 dargestellt ist auch, daß die mobile Funkstation MS in dem Signalisierungskanal RACH direkt die Anzahl der benötigten Übertragungskanäle RU angibt.

Die Basisstation BS wertet den Inhalt des Signalisierungskanals RACH, d.h. die Anzahl der benötigten Übertragungskanäle RU und die Empfangsstärke RXLEV in einer mit der Sende-/Empfangseinrichtung SEE verbundenen Auswerteeinrichtung AW aus. Nach der Auswertung erfolgt eine Zuweisung der angeforderten Übertragungskanäle RU durch einen weiteren Signalisierungskanal AGCH, der einem aus dem GSM-Mobilfunksystem bekannten erweiterten Signalisierungskanal AGCH (Access Grant Channel) zur Bestätigung der Zuweisung entsprechen kann. Die Sendeleistung des weiteren Signalisierungskanals AGCH wird auf der Grundlage des ausgewerten Signalisierungskanals RACH gesteuert, wobei ein gesicherter Empfang des Signalisierungskanals RACH am Ort der anfordernden mobilen Funkstation MS gegeben ist. Die Übertragungskanäle RU werden durch die Angabe der CDMA-Kodes C1, C4 zugewiesen, die anschließend von der mobilen Funkstation MS für das Senden und Empfangen von Nutz-und Signalisierungsinformationen verwendet werden. Vorteilhaft erfolgt durch das Senden des weiteren Signalisierungskanals AGCH keine Beeinträchtigung der Empfangsqualität für die weiteren mobilen Funkstationen MS, die in dem gleichen Frequenzband eine Kommunikationsverbindung V1, V2 aufgebaut haben. Dieses ist insbesondere bei dem beschriebenen CDMA-Teilnehmerseparierungsverfahren von großer Bedeutung, da bei einem zu hohen Grundrauschen die eigentlich übertragenen Signale in der empfangenden mobilen Funkstation MS nicht mehr herausgefiltert werden können.

Auf eine Besonderheit bei dem beispielhaften Einsatz des erfindungsgemäßen Verfahrens in einem Funk-Kommunikationssystem mit sowohl einer CDMA- als auch einer TDMA-Teilnehmerseparierung, dessen Struktur in der FIG 2 dargestellt ist, geht das in der FIG 4 dargestellt Signalisierungsdiagramm ein. Im Vergleich zu dem bekannten GSM-Mobilfunksystem, bei dem in jedem Zeitschlitz ts nur ein Übertragungskanal RU zur Verfügung steht, können bei dieser Struktur der Funkschnittstelle mehrere Übertragungskanäle RU parallel in einem Frequenzband B und Zeitschlitz ts für Kommunikationsverbindungen V genutzt werden. Hierbei kann somit der Fall auftreten, daß mehreren mobilen Funkstationen MS in einem Zeitschlitz ts jeweils ein oder mehrere Übertragungskanäle RU zugewiesen werden. In dem GSM-Mobilfunksystem erfolgt die Zuweisung von Übertragungskanälen RU zu mobilen Funkstation MS ohne Berücksichtigung von jeweils in einem Zeitschlitz ts vorherschenden Interferenzund sonstigen Störerscheinnungen. Da diese Störungen, die die Empfangsqualität der mobilen Funkstation MS sehr stark beeinträchtigen können, abhängig von dem Aufenthaltsort der mobilen Funkstation MS sind, bestimmt die mobile Funkstation MS vor dem Verbindungsaufversuch zusätzlich die jeweiligen Interferenzbedingungen in den Zeitschlitzen ts.

Die jeweiligen Interferenzbedingungen können in der mobilen Funkstation MS beispielsweise mit einem Berwertungsfaktor belegt werden und dieser Bewertungsfaktor in dem Signalisierungskanal RACH zu der Basisstation BS übertragen werden. Auf der Grundlage der Interferenzmessungen durch die mobile Funkstation MS steuert die Auswerteeinrichtung AW in der Basisstation BS die Zuweisung der angeforderten Übertragungskanäle RU, gekennzeichnet durch zwei CDMA-Kodes C1 und C4 in den Zeitschlitzen ts1 bzw. ts2, wobei vorteilhaft die Übertragungskanäle RU in einem oder mehreren Zeitschlitzen ts zugewiesen werden, in denen für die mobile Funkstation MS die günstigste Interferenzsituation gegeben ist. Hierdurch wird vorteilhaft die Übertragungsqualität innerhalb des gesamten Funkversorgungsbereiches der Basisstation BS erhöht.

## Patentansprüche

1. Verfahren zur Kanalzuweisung in einem Funk-Kommunikationssystem, das
ein CDMA-Teilnehmerseparierungsverfahren zur Übertragung von Informationen für Kommunikationsverbindungen über eine Funkschnittstelle zwischen einer Basisstation (BS) und einer Funkstation (MS) nutzt,
bei dem
- von der Funkstation (MS) eine Anforderung einer Anzahl Übertragungskanäle (RU) für eine Kommunikationsverbindung zu der Basisstation (BS) in einem Signalisierungskanal (RACH) signalisiert wird,
- von der Funkstation (MS) zusätzliche Informationen über bestimmte Übertragungsbedingungen der Funkschnittstelle in dem Signalisierungskanal (RACH) zu der Basisstation (BS) signalisiert werden, und
- die zusätzlichen Informationen von der Basisstation (BS) ausgewertet und für eine Steuerung einer Sendeleistung für einen weiteren Signalisierungskanal (AGCH) zur Zuweisung der angeforderten Anzahl Übertragungskanäle (RU) zu der Funkstation (MS) berücksichtigt werden.

2. Verfahren zur Kanalzuweisung in einem Funk-Kommunikationssystem, das
ein CDMA-Teilnehmerseparierungsverfahren zur Übertragung von Informationen für Kommunikationsverbindungen über eine Funkschnittstelle zwischen einer Basisstation (BS) und einer Funkstation (MS) nutzt,
bei dem
- von der Funkstation (MS) eine Anforderung eines der Funkstation exklusiv zugeordneten Signalisierungskanals (SDCCH) zu der Basisstation (BS) in einem Signalisierungskanal (RACH) signalisiert wird,
- von der Funkstation (MS) zusätzliche Informationen über bestimmte Übertragungsbedingungen der Funkschnittstelle in dem Signalisierungskanal (RACH) zu der Basisstation (BS) signalisiert werden, und
- die zusätzlichen Informationen von der Basisstation (BS) ausgewertet und für eine Steuerung einer Sendeleistung für einen weiteren Signalisierungskanal (AGCH) zur Zuweisung des angeforderten exklusiv zugeordneten Signalisierungskanals (SDCCH) zu der Funkstation (MS) berücksichtigt werden.

3. Verfahren nach Anspruch 1 oder 2, bei dem
von ersten Funkstation (MS) als zusätzliche Informationen ein Empfangspegel (RXLEV) für einen von der Basisstation (BS) mit einer konstanten Sendeleistung gesendeten allgemeinen Signalisierungskanal (BCCH) mit allgemeinen Informationen über das Funk-Kommunikationssystem bestimmt wird.

4. Verfahren nach Anspruch 1 oder 2, bei dem
von der Funkstation (MS) als zusätzliche Informationen zumindest ein charakteristischer Wert bestimmt wird, der eine Aussage über einen Empfangspegel (RXLEV), eine Bitfehlerrate und/oder ein der Signallaufzeit zwischen der Funkstation (MS) und der Basisstation (BS) proportionaler Wert und/oder ein Signal-Rausch-Verhältnis beinhaltet.

5. Verfahren nach einem vorhergehenden Anspruch, bei dem zusätzlich eine Teilnehmerseparierung gemäß einem TDMA-Verfahren durchgeführt wird, wobei ein Übertragungskanal (RU) durch ein Frequenzband (B), einen Zeitschlitz (ts) und einen CDMA-Kode (c) definiert wird.

6. Verfahren nach dem vorhergehenden Anspruch, bei dem
von der Funkstation (MS) als zusätzliche Informationen eine jeweilige Interferenzsituation in den Zeitschlitzen (ts) bestimmt und zu der Basisstation (BS) signalisiert wird.

7. Verfahren nach dem vorhergehenden Anspruch, bei dem
die zusätzlichen Informationen über die Interferenzsituation von der Basisstation (BS) für eine Auswahl zumindest eines geeigneten Zeitschlitzes (ts), in dem die Anzahl Übertragungskanäle (RU) zugewiesen wird, berücksichtigt wird.

8. Verfahren nach einem vorhergehenden Anspruch, bei dem
die Informationsübertragung gemäß einem TDD-Verfahren durchgeführt wird, wobei die Informationen von der Funkstation (MS) zu der Basisstation (BS) und von der Basisstation (BS) zu der Funkstation (MS) zeitlich getrennt in einem Frequenzband (B) übertragen werden.

9. Basisstation (BS) eines Funk-Kommunikationssystems, das ein CDMA-Teilnehmerseparierungsverfahren nutzt, mit
- einer Sende-/Empfangseinrichtung (SEE) zum Empfangen einer Anforderung einer Anzahl Übertragungskanäle (RU) für eine Kommunikationsverbindung in einem Signalisierungskanal (RACH), und
- einer Auswerteeinrichtung (AW) zum Auswerten von in dem Signalisierungskanal (RACH) zusätzlich signalisierten Informationen über Übertragungsbedingungen der Funkschnittstelle und zum Steuern einer Sendeleistung für einen weiteren Signalisierungskanal (AGCH) zur Zuweisung der angeforderten Anzahl Übertragungskanäle (RU).

10. Basisstation (BS) eines Funk-Kommunikationssystems, das ein CDMA-Teilnehmerseparierungsverfahren nutzt, mit
- einer Sende-/Empfangseinrichtung (SEE) zum Empfangen einer Anforderung eines einer Funkstation (MS) exklusiv zugeordneten Signalisierungskanals (SDCCH) in einem Signalisierungskanal (RACH), und
- einer Auswerteeinrichtung (AW) zum Auswerten von in dem Signalisierungskanal (RACH) zusätzlich signalisierten Informationen über Übertragungsbedingungen der Funkschnittstelle und zum Steuern einer Sendeleistung für einen weiteren Signalisierungskanal (AGCH) zur Zuweisung des exklusiv zugeordneten Signalisierungskanals (SDCCH).

11. Basisstation (BS) nach Anspruch 9 oder 10, bei der
die Auswerteeinrichtung (AW) als zusätzliche Informationen eine bestimmte Interferenzsituation in einem jeweiligen Zeitschlitz (ts) für eine Auswahl zumindest eines geeigneten Zeitschlitzes (ts) für die Zuweisung der angeforderten Anzahl Übertragungskanäle (RU) berücksichtigt, wobei in dem Funk-Kommunikationssystem zusätzlich eine Teilnehmerseparierung gemäß einem TDMA-Verfahren erfolgt.

12. Basisstation (BS) nach Anspruch 9, 10 oder 11,
die als eine Basisstation (BS) eines Mobilfunksystems oder eines drahtlosen Teilnehmerzugangssystems ausgestaltet ist.

## Claims

1. Method for channel allocation in a radio communication system, which uses a CDMA subscriber separation method for transmitting information for communication connections via a radio interface between a base station (BS) and a radio station (MS), in which
- the radio station (MS) signals a request for a number of transmission channels (RU) for a communication connection in a signalling channel (RACH) to the base station (BS),
- the radio station (MS) signals additional information about certain transmission conditions of the radio interface in the signalling channel (RACH) to the base station (BS), and
- the additional information is evaluated by the base station (BS) and taken into consideration for controlling a transmitting power for a further signalling channel (AGCH) for allocating the requested number of transmission channels (RU) to the radio station (MS).

2. Method for channel allocation in a radio communication system, which uses a CDMA subscriber separation method for transmitting information for communication connections via a radio interface between a base station (BS) and a radio station (MS), in which
- the radio station (MS) signals a request for a signalling channel (SDCCH), exclusively allocated to the radio station, to the base station (BS) in a signalling channel (RACH),
- the radio station (MS) signals additional information about certain transmission conditions of the radio interface in the signalling channel (RACH) to the base station (BS), and
- the additional information is evaluated by the base station (BS) and taken into consideration for controlling a transmitting power for a further signalling channel (AGCH) for allocating the requested, exclusively allocated signalling channel (SDCCH) to the radio station (MS).

3. Method according to Claim 1 or 2, in which the first radio station (MS) determines as additional information a received level (RXLEV) for a general signalling channel (BCCH), sent by the base station (BS) with a constant transmitting power, with general information about the radio communication system.

4. Method according to Claim 1 or 2, in which the radio station (MS) determines as additional information at least one characteristic value which contains information on a received level (RXLEV), a bit error rate and/or a value proportional to the signal transit time between the radio station (MS) and the base station (BS) and/or a signal/noise ratio.

5. Method according to a preceding claim, in which a subscriber separation according to a TDMA method is additionally performed, a transmission channel (RU) being defined by a frequency band (B), a time slot (ts) and a CDMA code (c).

6. Method according to the preceding claim, in which the radio station (MS) determines, and signals to the base station (BS), a respective interference situation in the time slots (ts) as additional information.

7. Method according to the preceding claim, in which the additional information about the interference situation is taken into consideration by the base station (BS) for selecting at least one suitable time slot (ts) in which the number of transmission channels (RU) is allocated.

8. Method according to a preceding claim, in which the information is transmitted in accordance with a TDD method, the information being transmitted from the radio station (MS) to the base station (BS) and from the base station (BS) to the radio station (MS) separated in time in a frequency band (B).

9. Base station (BS) of a radio communication system which uses a CDMA subscriber separation method, comprising
- a transceiver device (SEE) for receiving a request for a number of transmission channels (RU) for a communication connection in a signalling channel (RACH), and
- an evaluating device (AW) for evaluating information, additionally signalled in the signalling channel (RACH) about transmission conditions of the radio interface and for controlling a transmitting power for a further signalling channel (AGCH) for allocating the requested number of transmission channels (RU).

10. Base station (BS) of a radio communication system which uses a CDMA subscriber separation method, comprising
- a transceiver (SEE) for receiving a request for a signalling channel (SDCCH), exclusively allocated to a radio station (MS), in a signalling channel (RACH), and
- an evaluating device (AW) for evaluating information, additionally signalled in the signalling channel (RACH), about transmission conditions of the radio interface and for controlling a transmitting power for a further signalling channel (AGCH) for allocating the exclusively allocated signalling channel (SDCCH).

11. Base station (BS) according to Claim 9 or 10, in which the evaluating device (AW) takes into consideration as additional information a certain interference situation in a respective time slot (ts) for selecting at least one suitable time slot (ts) for allocating the requested number of transmission channels (RU), an additional subscriber separation according to a TDMA method being effected in the radio communication system.

12. Base station (BS) according to Claim 9, 10 or 11, which is designed as a base station (BS) of a mobile radio station or of a wireless subscriber access system.

## Revendications

1. Procédé pour l'affectation d'un canal dans un système de radiotélécommunications, lequel fait appel à un procédé CDMA de séparation d'abonnés pour la transmission d'informations pour des liaisons de communication via une interface radio entre une station de base (BS) et une station radio (MS), dans lequel
- une demande d'un nombre de canaux de transmission (RU) pour une liaison de communication est signalée dans un canal de signalisation (RACH), de la station radio (MS) vers la station de base (BS),
- des informations additionnelles sur certaines conditions de transmission de l'interface radio sont signalées dans le canal de signalisation (RACH), de la station radio (MS) vers la station de base (BS) et
- les informations additionnelles sont analysées par la station de base (BS) et prises en compte pour un réglage d'une puissance d'émission pour un autre canal de signalisation (AGCH) pour l'affectation du nombre demandé de canaux de transmission (RU) à la station radio (MS).

2. Procédé pour l'affectation d'un canal dans un système de radiotélécommunications, lequel fait appel à un procédé CDMA de séparation d'abonnés pour la transmission d'informations pour des liaisons de communication via une interface radio entre une station de base (BS) et une station radio (MS), dans lequel
- une demande d'un canal de signalisation (SDCCH) exclusivement assigné à la station radio est signalée dans un canal de signalisation (RACH), de la station radio (MS) vers la station de base (BS),
- des informations additionnelles sur certaines conditions de transmission de l'interface radio sont signalées dans le canal de signalisation (RACH), de la station radio (MS) vers la station de base (BS) et
- les informations additionnelles sont analysées par la station de base (BS) et prises en compte pour un réglage d'une puissance d'émission pour un autre canal de signalisation (AGCH) pour l'affectation, à la station radio (MS), du canal de transmission demandé (SDCCH) dont l'assignation est exclusive.

3. Procédé selon la revendication 1 ou 2, dans lequel un niveau de réception (RXLEV) pour un canal de signalisation (BCCH) général dans lequel la station de base (BS) émet avec une puissance d'émission constante est défini en tant qu'informations additionnelles par une première station radio (MS) à l'aide d'informations générales sur le système de radiotélécommunications.

4. Procédé selon la revendication 1 ou 2, dans lequel est définie par la station radio (MS), en tant qu'informations additionnelles, une valeur caractéristique contenant une information sur un niveau de réception (RXLEV), un taux d'erreur de bits et / ou une valeur proportionnelle au temps de parcours du signal entre la station radio (MS) et la station de base (BS) et / ou un rapport signal / bruit.

5. Procédé selon l'une des revendications précédentes, dans lequel il est additionnellement procédé à une séparation d'abonnés selon un procédé TDMA, un canal de transmission (RU) étant défini par une bande de fréquence (B), une fente de temps (ts) et un code CDMA (c).

6. Procédé selon la revendication précédente, dans lequel est définie par la station radio (MS), en tant qu'informations additionnelles, une situation d'interférence dans chaque fente de temps (ts), laquelle est signalée vers la station de base (BS).

7. Procédé selon la revendication précédente, dans lequel il est tenu compte, par la station de base (BS), des informations additionnelles sur la situation d'interférence pour une sélection d'au moins une fente de temps (ts) appropriée dans laquelle il est procédé à l'affectation du nombre de canaux de transmission (RU).

8. Procédé selon l'une des revendications précédentes, dans lequel il est procédé à la transmission d'informations selon un procédé TDD, les informations étant transmises, dans une bande de fréquence (B) et séparément dans le temps, de la station radio (MS) vers la station de base (BS) et de la station de base (BS) vers la station radio (MS).

9. Station de base (BS) d'un système de radiotélécommunications faisant appel à un procédé CDMA de séparation d'abonnés, comprenant
- un dispositif émetteur / récepteur (SEE) pour la réception d'une demande d'un nombre de canaux de transmission (RU) pour une liaison de communication dans un canal de signalisation (RACH) et
- un dispositif d'analyse (AW) pour l'analyse d'informations additionnellement signalées dans ledit canal de signalisation (RACH), lesdites informations concernant des conditions de transmission de l'interface radio et servant au réglage d'une puissance d'émission pour un autre canal de signalisation (AGCH) pour l'affectation du nombre demandé de canaux de transmission (RU).

10. Station de base (BS) d'un système de radiotélécommunications faisant appel à un procédé CDMA de séparation d'abonnés, comprenant
- un dispositif émetteur / récepteur (SEE) pour la réception d'une demande d'un canal de signalisation (SDCCH) exclusivement assigné à une station radio (MS) dans un canal de signalisation (RACH) et
- un dispositif d'analyse (AW) pour l'analyse d'informations additionnellement signalées dans ledit canal de signalisation (RACH), lesdites informations concernant des conditions de transmission de l'interface radio et servant au réglage d'une puissance d'émission pour un autre canal de signalisation (AGCH) pour l'affectation du canal de signalisation (SDCCH) dont l'assignation est exclusive.

11. Station de base (BS) selon la revendication 9 ou 10, dans laquelle le dispositif d'analyse (AW) tient compte, en tant qu'informations additionnelles, d'une certaine situation d'interférence dans chaque fente de temps (ts) pour la sélection d'au moins une fente de temps (ts) appropriée pour l'affectation du nombre demandé de canaux de transmission (RU), une séparation d'abonnés selon un procédé TDMA étant additionnellement effectuée dans le système de radiotélécommunications.

12. Station de base (BS) selon la revendication 9, 10 ou 11, réalisée sous la forme d'une station de base (BS) d'un système radio mobile ou d'un système d'accès d'abonnés sans fil.
